# EUROPEAN PATENT APPLICATION

(11) **EP 1 204 060 A1**
(43) Date of publication of application: **08.05.2002**
(21) Application number: 01904482.5
(22) Date of filing: 15.02.2001
(51) Int. Cl.: G06F 17/60

(54) **SYSTEM FOR RECOGNIZING DAMAGED PART OF ACCIDENT-INVOLVED CAR AND COMPUTER-READABLE MEDIUM ON WHICH PROGRAM IS RECORDED**

(30) Priority: 15.02.2000 JP 2000036190
(71) Applicant: E.A.C Co., Ltd., Sendai-shi, Miyagi 983-0852 (JP)
(72) Inventor: UEGAKI, Tateo, Sendai-shi, Miyagi 983-0011 (JP)
(74) Representative: Steil, Christian, Dipl.-Ing.
(86) International application number: JP0101094
(87) International publication number: WO0161582

(57) **Abstract**

A system for recognizing a damaged part of an accident vehicle is capable of recognizing a precise damaged part of the accident vehicle. This system includes a storage device for storing vehicle attribute data for every car type, parts data for every car type and impact transfer data of each part for every car type, an input device for inputting an input state of an impact upon a judgement target vehicle, and a control unit for judging which part is damaged on the basis of the input data from the input device and the impact transfer data stored in the storage device.

## Description

### Technical Field

The present invention relates to a system for recognizing a damaged portion of an accident vehicle.

### Background Arts

A system for estimating a cost for repairing an accidence vehicle includes a system for an operator to selectively specify a range of damage by use of list-of-parts data and illustration data of the vehicle.

Then, what can be considered as this system is, for instance, a computer system in which a start point (a position of collision) of the damage and an end point (a damaged position farthest from the position of collision) thereof are inputted by a mouse etc on the illustration of an outer plate panel of the automobile displayed on a display device, and a portion (part) extending from the start point to the end point is judged to be a damaged part.

Further, a computer system that can be also considered is that a part upon which the damage is exerted (the impact is transferred) is presumed by inputting pieces of data such as a start point of the damage, an impact force and a colliding direction, and this part is judged to be a damaged part.

The vehicle is assembled by the parts composed of a variety of materials and having different rigidities. The impact force is absorbed by a portion having a weak structural rigidity in a way that deforms the structural member, and is transferred via a portion having a strong structural rigidity without deforming the structural member to a structural member provided at a rear stage thereof. Over the recent years, there have been offered vehicles in which a shock absorbing member is incorporated into the structure in order to safeguard a cabin (a space for an occupant) when accident happens by utilizing this characteristic.

The conventional repair cost estimation system does not, however, take any form of the damage exertion into account and has such a notion about the damaged part that the impact simply becomes smaller as it is spaced farther away from the position of the collision. The conventional system is therefore incapable of making an accurate estimation conformable with the actual vehicle and might fall into a less reliable estimation process.

It is a primary object of the present invention, which was devised in view of the items described above, to provide a system capable of recognizing a precise damaged part of an accident vehicle.

It is another object of the present invention to provide a system enabling even an inexperienced worker unfamiliar with estimating a cost for repairing the accident vehicle to easily execute an estimation process.

### Disclosure of the Invention

A system for recognizing a damaged part of an accident vehicle according to the present invention comprises a storing means for storing vehicle attribute data for every car type, parts data for every car type and impact transfer data of each part for every car type, an impact state input means for inputting an input state of an impact upon a judgement target vehicle, and a damaged part judging means for judging which part is damaged on the basis of the input data from the impact state input means and the impact transfer data stored in the storing means.

The impact state input means may set, as the input state of the impact, pieces of data such as a degree of the impact upon the vehicle, an impact input point and an impact input direction.

The system according to the present invention may further comprise a displaying means for displaying image data of the vehicle. The impact state input means may input the input state of the impact upon the vehicle on a vehicle image displayed on the displaying means, and the damaged part judging means may display the part judged to be damaged on the displaying means.

The damaged part judging means may display the damaged parts in a way that sorts out the damaged parts corresponding to a degree of the damage.

The damaged part j udging means may further judge the degree of the damage of the damaged part, and may include a repair cost calculating means for calculating a repair cost from the parts data stored in the storing means.

The damaged part judging means may further judge the degree of the damage of the damaged part, and may include a repairing method presenting means for presenting a repair method on the basis of the parts data stored in the storing means.

The damaged part judging means may judge and preferentially select which method, a replacement or a repair, is advantageous to reduce the cost with respect to the damaged part.

The storing means may further store standard impact transfer data of the impact upon the vehicle with respect to the respective parts, and the impact transfer data for every car type may be set as an index value for the standard impact transfer data.

The impact transfer data stored in the storing means may be set for every part of each car type as a ratio of an input impact value to an input impact value of the part.

Further, there is provided a readable-by-computer medium recorded with a program executed by a computer including a storing means for storing vehicle attribute data for every car type, parts data for every car type and impact transfer data of each part for every car type, and an impact state input means for inputting an input state of an impact upon a judgement target vehicle, the program comprising a step of judging which part is damaged on the basis of the input data from the impact state input means and the impact transfer data stored in the storing means.

According to the present invention, it is feasible to provide the system capable of recognizing the precise damaged part of the accident vehicle.

It is also possible to provide the system enabling even the inexperienced worker unfamiliar with estimating the cost for repairing the accident vehicle to easily execute the estimation process.

Note that the term "portion" used in this specification embraces in terminology a group of parts having coherence to some extent, which are related to one piece of part of the vehicle. The "coherence to some extent" implies a group of parts neighboring to one part, or a group of parts related when repairing one part (for example, a group of parts required to be attached and detached when repairing one part) . Note that one part may also be conceived as one portion.

### Brief Description of the Drawings

FIG. 1 is a block diagram showing an accident vehicle damaged part recognizing system in one embodiment of the present invention;
FIG. 2 is a diagram showing a layout of a screen displayed on a display device in the embodiment;
FIG. 3 is a diagram showing a layout of the screen displayed on the display device in the embodiment;
FIG. 4 is a diagram showing a layout of the screen displayed on the display device in the embodiment;
FIG. 5 is a diagram showing a layout of the screen displayed on the display device in the embodiment;
FIG. 6 is a diagram showing a layout of the screen displayed on the display device in the embodiment;
FIG. 7 is a diagram showing a layout of the screen displayed on the display device in the embodiment;
FIG. 8 is a diagram showing a layout of the screen displayed on the display device in the embodiment;
FIG. 9 is a diagram showing a layout of the screen displayed on the display device in the embodiment;
FIG. 10 is a diagram showing a layout of the screen displayed on the display device in the embodiment;
FIG. 11 is a diagram showing a layout of the screen displayed on the display device in the embodiment;
FIG. 12 is a diagram showing a layout of the screen displayed on the display device in the embodiment; and
FIG. 13 is an explanatory flowchart showing a control process by a computer in the embodiment.

### Best Mode for Carrying out the Invention

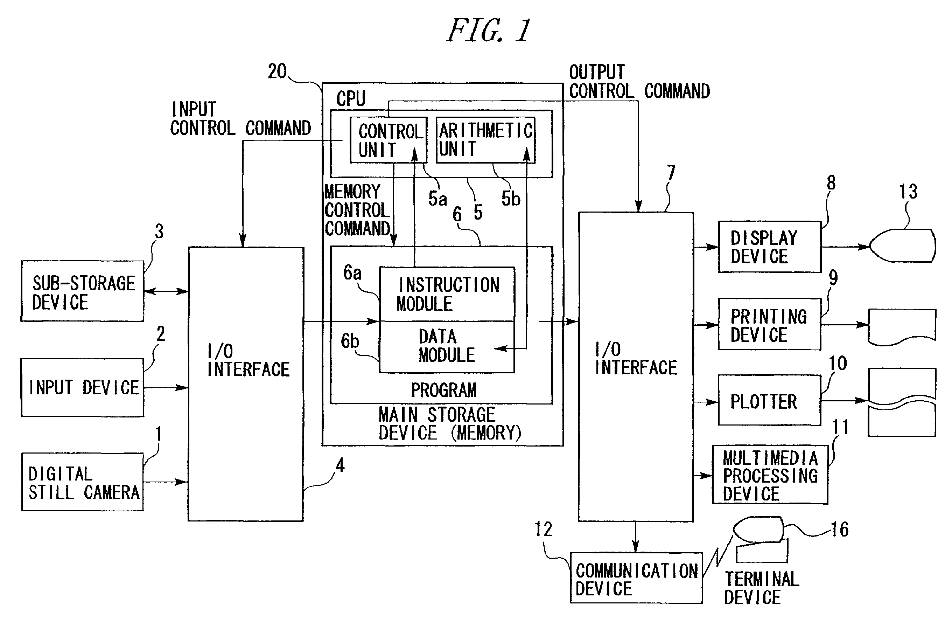

One embodiment of an accident vehicle damaged part recognizing system of the present invention will hereinafter be described referring to FIGS. 1 through 13.

The accident vehicle damaged part recognizing system in this embodiment is, as shown in FIG. 1, configured by a personal computer(that will hereinafter be abbreviated to PC) 20, a sub-storage device 3 connected via an I/O interface 4 to the PC 20, an input device 2 such as a keyboard, a mouse, a trackball a touch pad and so on, a digital still camera 1, and output devices such as a display device 8 connected via an I/O interface 7 to the PC 20, a printing device 9 and a communication device 12.

Herein, the sub-storage device 3 connected via the I/O interface 4 to the PC 20 may involve the use of a floppy disk device, a hard disk device or an optical disk device. Note that the sub-storage device 3 corresponds to a storing means.

Then, an OCR (Optical Character Reader) , an OMR (Optical Mark Reader) , a bar code reader, a digitizer, an image scanner and a voice recognizing device in addition to the keyboard etc may also be connected as the input device 2. Note that a plotter 10 and a multimedia processing device 11 other than the display device 8 etc may also be connected as the output device. Moreover, the communication device 12 may be connected via communication lines to other terminal devices 16. It is to be noted that the input device 2 corresponds to an impact state input means, and the display device 8 and the display 13 connected to the display device 8 correspond to display means.

Further, the system in this embodiment includes a device for taking in image data of a repair target vehicle. The device for taking in the image data of the repair target vehicle may involve the use of, in addition to the digital still camera 1, an optical sensor having a light projection unit, a light receiving optical unit and a photoelectrically converting unit. Herein, the light projection unit of the optical sensor uses a tungsten lamp, a halogen lamp, a fluorescent lamp and so on for continuous light, and a xenon lamp for intermittent light. Then, the light receiving optical system involves the use of an ITV camera using vidicon, silicon vidicon, Chalnicon etc., a semiconductor sensor, or a MOS- and CCD-type fixed camera. The photoelectrically converting unit is constructed of an imaging tube, a solid-state image pickup tube device, a photoelectric converting device and so on.

Note that the device for taking in the image data of the repair vehicle may involve the use of, in addition to the digital still camera 1, a dynamic image pickup camera, wherein a stream of dynamic image is obtained by photographing the repair target vehicle placed on a turntable in a way that makes one rotation of this vehicle in a fixed direction, and static images viewed in predetermined directions may be extracted for use from the stream of dynamic image.

The PC 20 is constructed of a main storage device 6 (a hard disk, a ROM and a RAM [which are generically called a memory]) and a central processing unit 5 (that will hereinafter be abbreviated to CPU) . Then, the PC 20 making a judgement about a damaged part of the accident vehicle and estimating a cost for repairing it, boots a program cached in the memory 6 or the sub-storage device 3 under OS control and executes a predetermined task (process). This PC20 is also capable of executing multitasks in a way that virtually simultaneously executes a plurality of tasks in parallel.

Note that a function of a memory management device is included in the functions of the PC20. Namely, this memory management device has also a function of translating a logical address on the memory 6 that is specified by the process in order to read or write into a physical address indicating a physical page address for actually reading from and writing to the memory 6.

Next, the CPU 5 as a main component of the PC20 includes an arithmetic device 5b for performing arithmetic operations and logical operations with respect to the data given, and a control unit 5a for reading an instruction into the CPU 5 from the memory 6 on the basis of an address of an instruction module 6a to be executed, then decoding a content of the instruction and giving necessary operating indications to other devices.

This control unit 5a, as shown in FIG. 1, issues an input control command to the input device 2 etc, a memory 6 control command to the memory 6 and an output control command to the output device etc.

Then, the command inputted from the input device 2 etc is transferred at first to the memory 6. The memory 6 selects data and an instruction out of the command given, and transfers the selected data and instruction to the control unit 5a of the CPU 5.

Herein, the image data taken in by the digital still camera 1 and transferred to the memory 6 via the I/O interface 4, or the repair vehicle data inputted from the input device 2 such as the keyboard are temporarily stored in a data module 6b of the memory 6. Note that the PC 20 corresponds to a damaged part judging means.

By the way, this data module 6b is stored with profile data of vehicle profiles viewed (imaged) in every direction with respect to each vehicle (each car model). The data module 6b is stored with the profile data of the vehicle profiles viewed in every direction by dividing overall 360-degree directions by, e.g., 12. Note that these pieces of profile data may be obtained by projecting the vehicle in every direction with the aid of CAD (Computer Aided Design) data and wire frame data prepared for every car model. Further, what can be exemplified as the vehicle profile data may be profile data of an outer configuration of the vehicle and of a vehicle internal structure. Moreover, the profile data may include image data for displaying the vehicle outer configuration and internal structure in details.

Further, the data module 6b is also stored with an areal size of each of the outer plate panels of every vehicle. Then, data module 6b is stored with items of vehicle data, parts data repair manual data, coating color data and coating method data corresponding to every car mode and a grade thereof.

Moreover, the data module 6b is stored with data sets showing prices of the vehicle parts and work wages for replacing the parts or repairing, and with mapping data as vehicle attribute data of the damaged parts of the vehicle that should be repaired to parts with which to replace the damaged parts or used for repairing these damaged parts. Further, the data module 6b is stored with the work wages data of the wages required for sheet metal repair corresponding to every work.

Furthermore, the data module 6b may be stored with those items of data in a ranking mode wherein, for example, the highest rank is given to a new genuine part, a good-condition part is given a middle rank, and a used genuine part is given the lowest rank among the parts for replacement.

The users are thereby given options for estimation, and the information is disclosed to the users and can help select the option, and it is feasible to increase a frequency of using the used parts network and so on and to scheme giving a boost to recycling.

Note that these items of data stored in the data module 6b contain vehicle image data, as vehicle attribute data, for searching for the damaged part of the repair target vehicle on the basis of the past repaired vehicle data, the past repaired vehicle damage data acquired from the past repaired vehicle data, the parts data used for the past repaired vehicles and the past repaired vehicle damaged part data.

The control unit 5a decodes the repair target vehicle data and the image data of the accident vehicle and also the instruction, which have been transferred from the memory 6, and gives a necessary operating indication to the arithmetic device 5b. Then, the arithmetic device 5b performs the logical operations with respect to the given repair target vehicle data, image data and instruction.

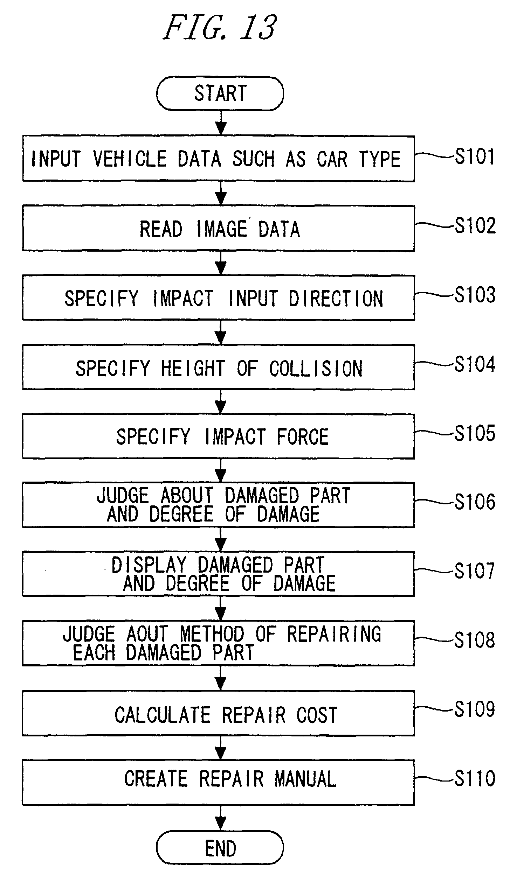

Next, the processing by the PC 20 in this embodiment will be explained referring mainly to a flowchart shown in FIG. 13.

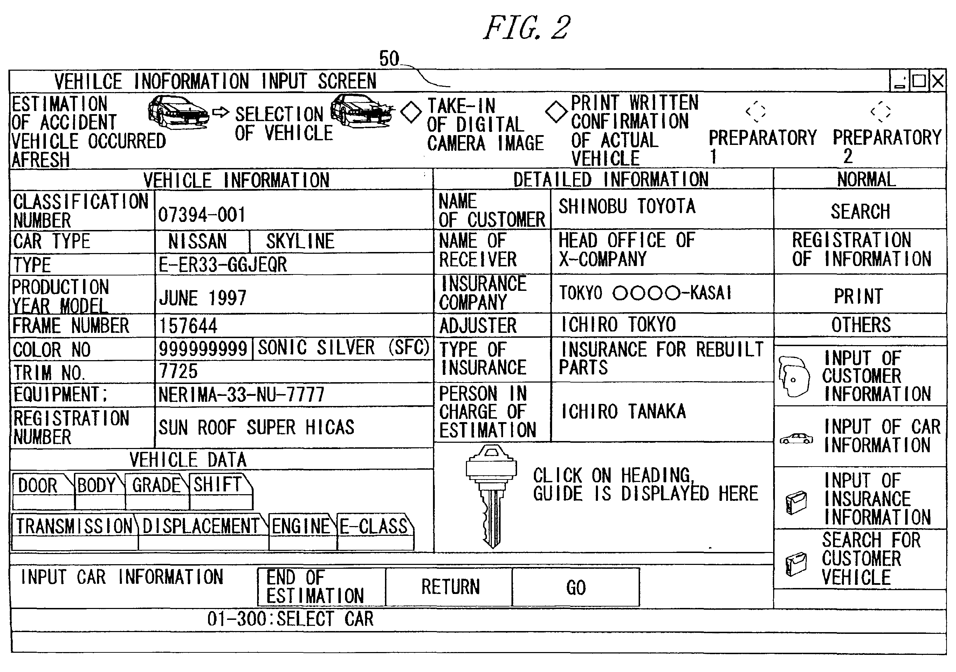

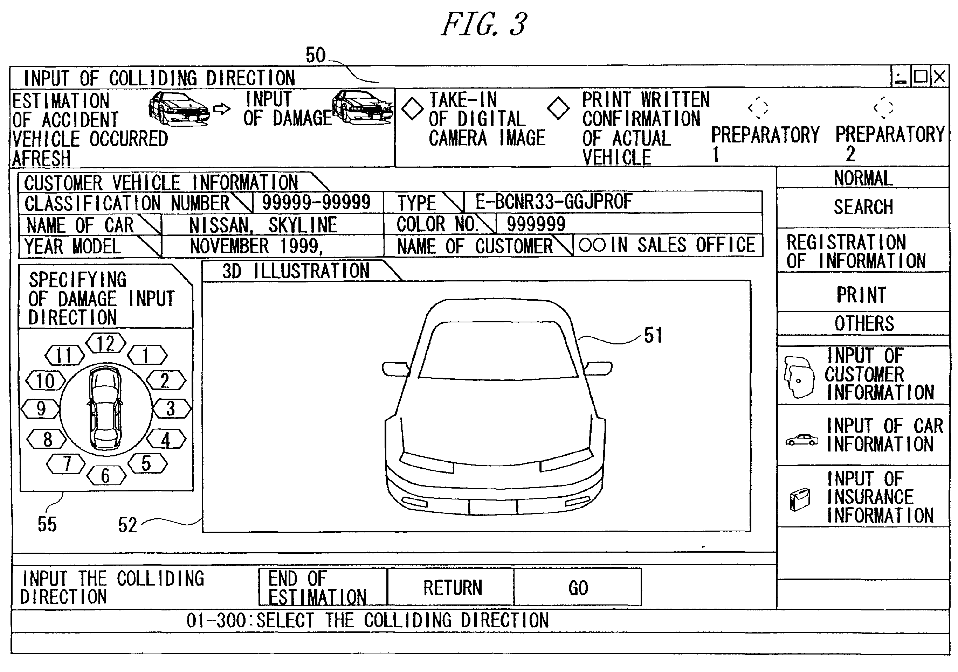

To start with, the operator inputs pieces of device data such as a car model, a type, a year model, a classification and a number of the accident vehicle on a screen 50 displayed on the display 13 by use of the input device 2 (step 101, FIG. 2). Then, the control unit 5a reads image data 51 of the car type corresponding to the inputted vehicle data from the sub-storage device 3, and the screen 50 containing a vehicle image data display area 52 displaying an image of the vehicle image data 51, is displayed on the display 13 (step 102, FIG. 3). Note that the screen 50 also displays a damage input direction specifying area 55, in which the vehicle can be viewed in the 12 directions into which the overall periphery of the vehicle is divided by 12 on the plane, for specifying a damage input direction.

Next, the control unit 5a judges which direction is specified through the input device in the damage input direction specifying area 55 (step 103). Herein, it is assumed that the direction 11 (an upper left direction of the vehicle) be specified.

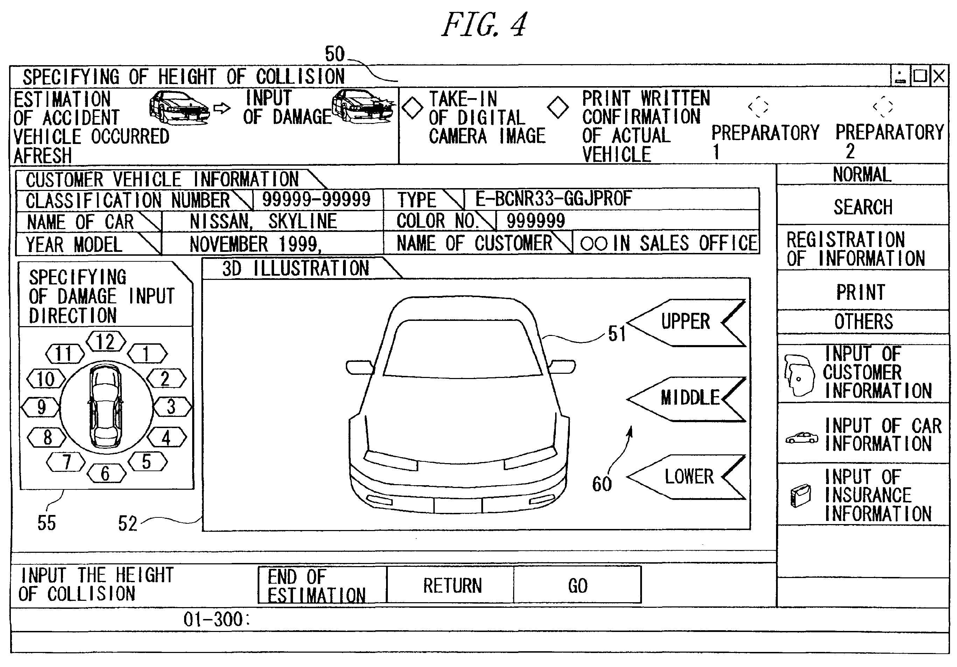

Thereafter, the control unit 5a displays height specifying bars 60 within the vehicle image data display area 52, and judges which damage position height is specified (step 104, FIG. 4). Note that a lower height be, it is assumed, specified.

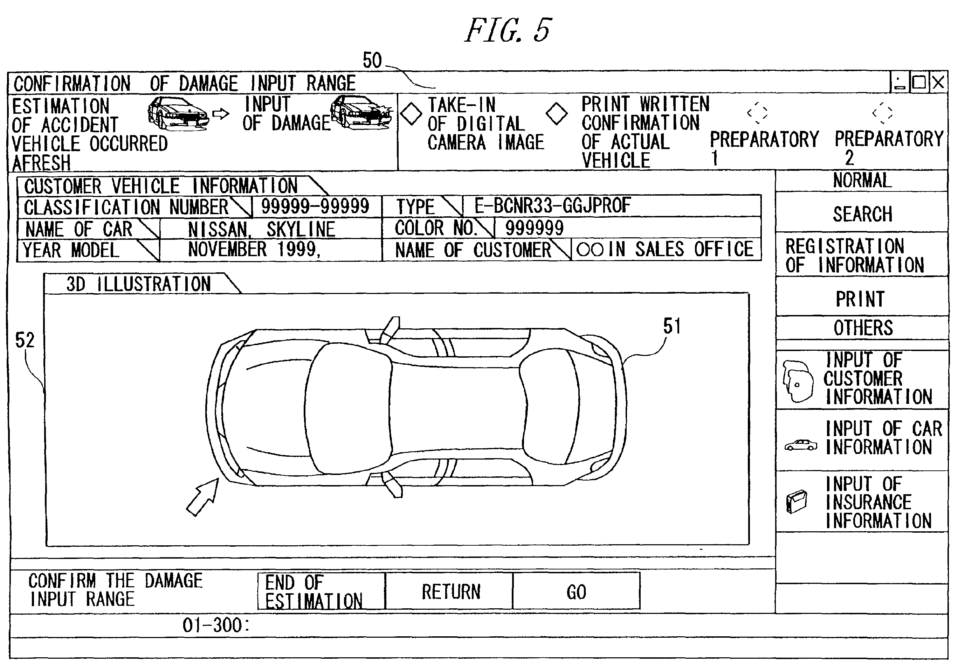

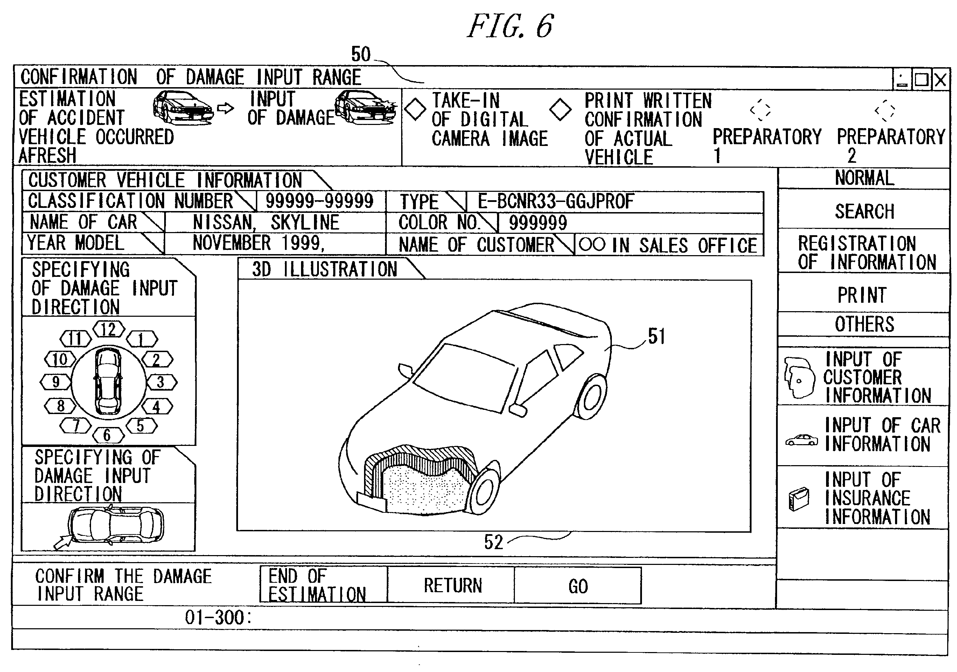

Next, the control unit 5a displays a plane image of the vehicle on the screen 50 and judges what degree of impact force is specified through the input device 2 (step 105). The control unit 5a, when judging how strong the impact force is, can judge a degree of the damage from a length of vector inputted on the screen 50 as shown in FIG. 5. Note that the operator, as shown in FIG. 6, specifies the vector to a certain length and may simultaneously display a caused-by-damage deformation, corresponding to that impact force, of the outer configuration of the vehicle as a vehicle image. With this contrivance, the external damaged shape of the collided portion of the accident vehicle can be well recognized from outside, and hence the operator is able to easily specify a precise impact force simply by determining the length of vector just when coming to the same deformation as the actual deformation of the outer configuration of the accident vehicle in a way that adjust the length of vector.

Further, the impact force may be specified by processing the image data of the accident vehicle that have been taken in from the digital still camera 1. To be specific, a profile of the vehicle is traced from the image data of the accident vehicle, a shape of this profile is compared with a shape of normal profile stored beforehand, a degree of deformation is recognized from a difference between their coordinate values, and the impact force is set to a value corresponding to this deformation.

Next, the control unit 5a judges where the damaged part is and a degree of the damage of this damaged part (step 106).

The sub-storage device 3 is stored with impact transfer data of each part for every car type on the basis of a rigidity, a material and a structure of the part, and the control unit 5a is therefore capable of recognizing a state of the damage in accordance with the car type from the impact transfer data. Namely, the impact transfer data stored in the sub-storage device 3 is set as an index value with respect to the standard part. For instance, a part having a rigidity higher than the standard part is easier to transfer the impact and is therefore given an index such as [1.2] and so on. Further, a part having a mesh structure or the line and a rigidity lower than the standard part is easier to absorb the impact and is therefore given an index such as [0.8] and so on. Note that the impact transfer data of the standard part itself and the index set to each part forever car type, are determined by analyzing collision test data of a test performed previously for every car type, however, the data can be updated based on fresh pieces of collision test data and accident accumulation data.

Unique impact transfer coefficients are given to the respective standard parts and stored in the sub-storage device 3. For example, when an impact transfer coefficient of a standard part A is [0.5], if an index of a part **a** of a certain car type that corresponds to the standard part A is [1.2], it follows that the part **a** transfers 60% (0.5 x 1.2 = 0.6) of the inputted impact to a part provided at a rear stage. Further, when an impact transfer coefficient of a standard part B is [0.3], if an index of a part **b** of a certain car type that corresponds to the standard part B is [0.8], it follows that the part **b** transfers 24% (0.3 x 0.8 = 24) of the inputted impact to a part provided at the rear stage.

In this embodiment, the impact transfer coefficient of the standard part and the impact transfer index of each part are set for facilitating a comparison in the impact transfer data between the parts for every car type, however, impact transfer coefficients (impact transfer data) of the respective parts fore very car type may be set beforehand and stored in the sub-storage device 3. Namely, a ratio (impact transfer coefficient) of an output impact value to an input impact value of the part is set as a piece of impact transfer data stored in the sub-storage device 3 with respect to every part of every car type.

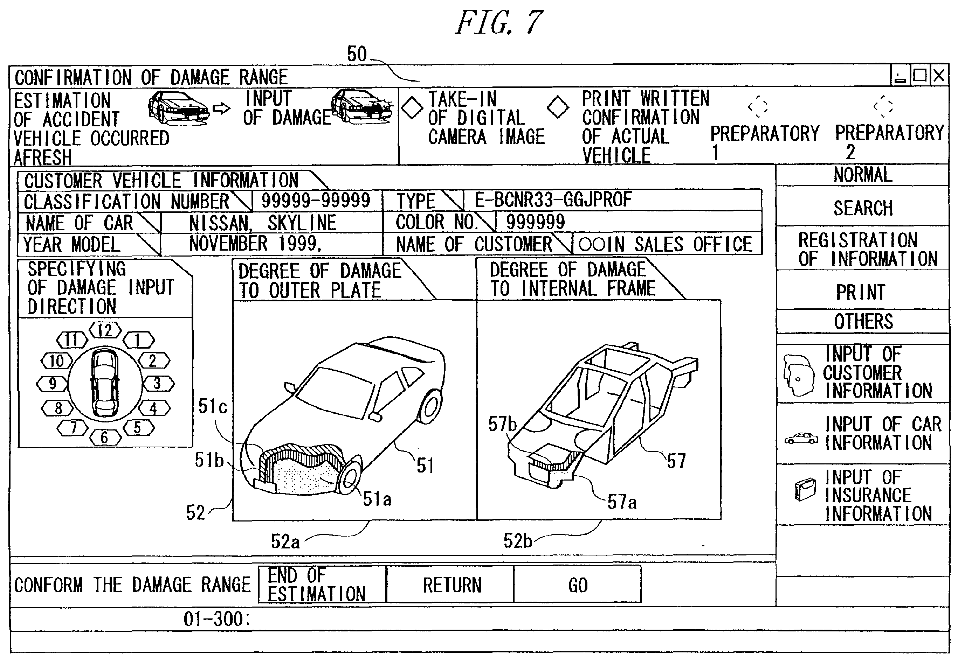

Then, the control unit 5a makes a judgement about the damaged part and the degree of damage in accordance with the car type on the basis of the impact input state data such as the impact input direction, the height of collision and the impact force and of the indexes set to the respective parts. FIG. 7 shows the screen 50 on which to display an outer plate degree-of-damage display area 52a containing the vehicle image data 51 indicating a degree of damage to the outer plate of the vehicle, and an internal frame degree-of-damage display area 52b containing vehicle image data 57 indicating a degree of damage to the internal frame of the vehicle. The outer plate degree-of-damage display area 52a displays a damaged part 51a (red) exhibiting a large degree of damage, a damaged part 51b (yellow) exhibiting an intermediate degree of damage and a damaged part 51c (blue) exhibiting a small degree of damage in different colors. Further, the internal frame degree-of-damage display area 52b displays a damaged part 57a (red) exhibiting a large degree of damage and a damaged part 57b exhibiting a small degree of damage in different colors (step 107).

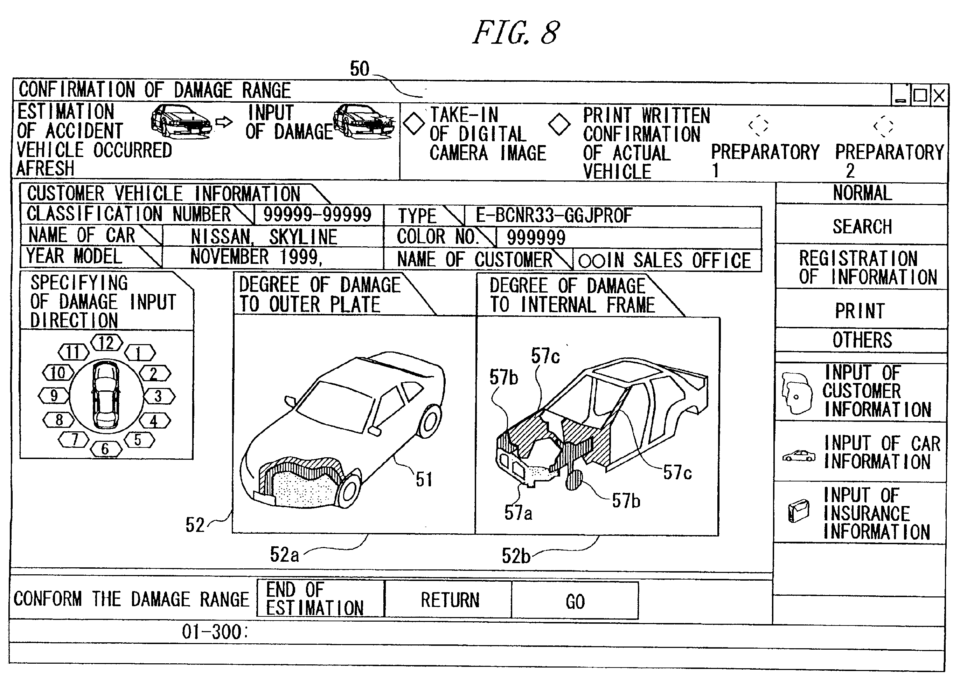

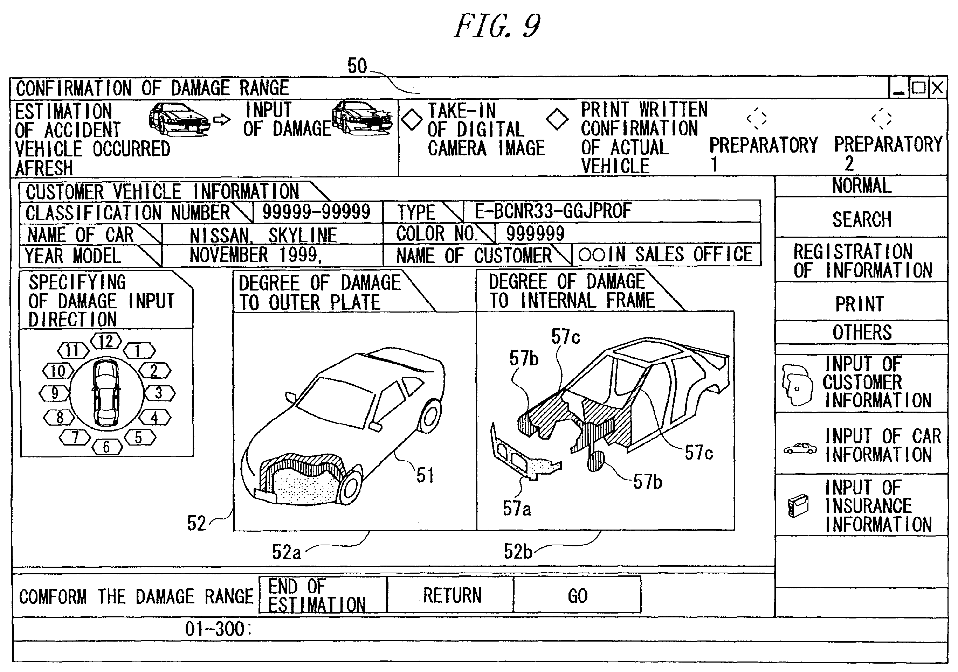

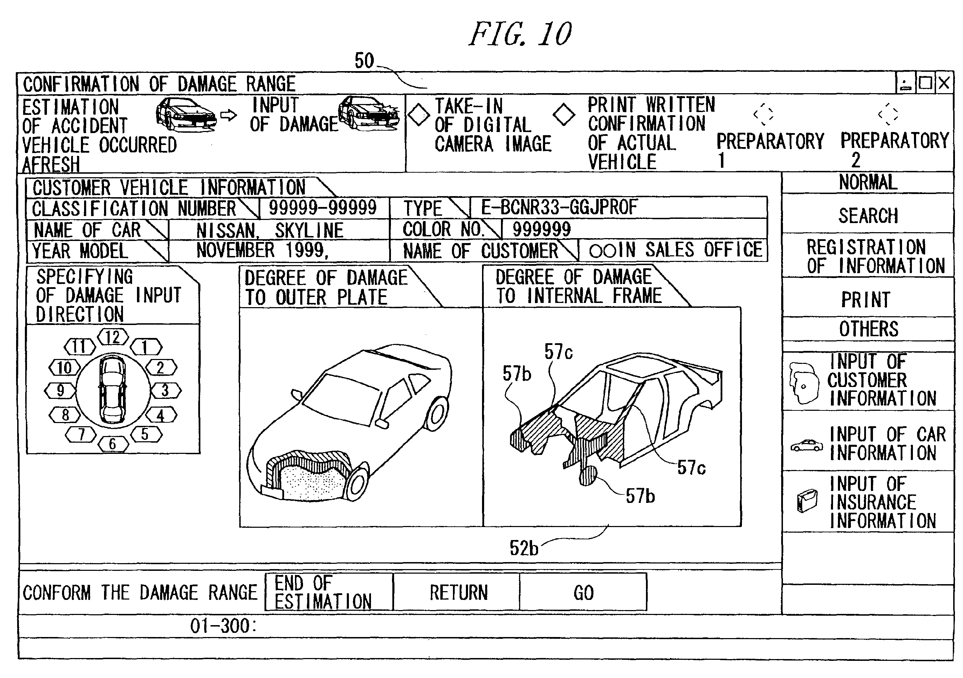

FIGS. 8 through 10 each show the screen on which the damaged part and the degree of damage to the vehicle are displayed in greater details in the internal frame degree-of-damage display area 52b in a way that focuses on the vehicle image data of the internal frame. Then, referring to FIG. 8, the internal frame degree-of-damage display area 52b displays a damaged part 57a (red) exhibiting a large degree of damage, a damaged part 57b (yellow) exhibiting an intermediate degree of damage and a damaged part 57c (blue) exhibiting a small degree of damage in colors. Note that the impact caused by the collision is, it can be recognized from the images in FIG. 8, transferred up to a left center pillar. Further, FIGS. 9 and 10 each show a state where the control unit 5a judges about a method of repairing the damaged part, wherein the control unit 5a displays a damaged part 57a (a front bumper) exhibiting a large degree of damage away from other parts, which implies that the damaged part 57a should be replaced with a new part (step 108).

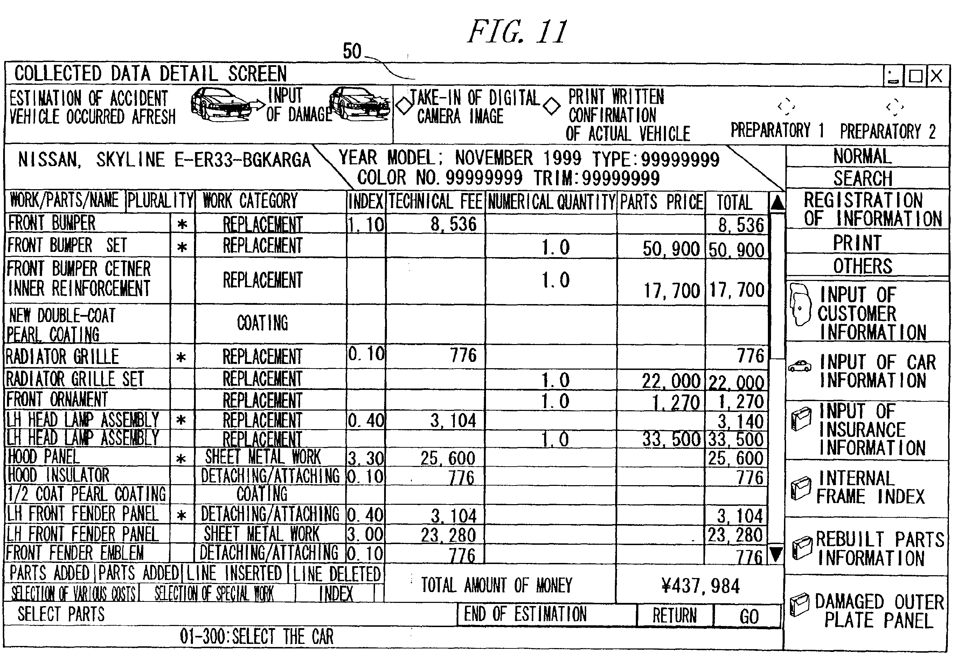

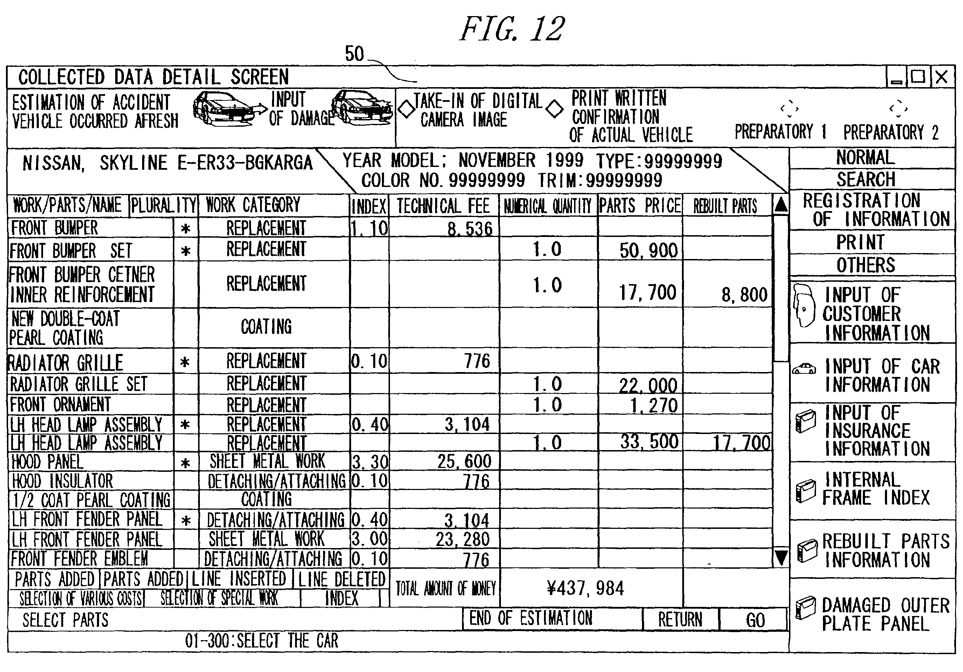

Next, the control unit 5a calculates a cost for repairing the vehicle by integrating prices of the parts and a work wage with reference to the parts data and so on in the sub-storage device 3 depending on the replacement or the repair according to the damaged part (parts) repairing method, and displays detailed estimation data on the screen 50 (step 109, FIG. 11) . Note that if the user admits the use of rebuilt parts when repairing the vehicle, the control unit 5a confirms whether there is a stock of the rebuilt parts corresponding to the replacement parts, and displays detailed repair cost estimation data containing prices of the rebuilt parts on the screen 50 (FIG. 12). Further, when estimating the repair cost, a list of the parts and the works related to the damaged part is displayed on the screen, and the operator may modify the estimation by properly selecting items from this list.

Then, the control unit 5a operates an estimation target vehicle repairing procedure and so on, then creates a repair manual, subsequently prints a written repair cost estimation and the repair manual, and thereafter finishes the processing (step 110).

As discussed above, according to the accident vehicle damaged part recognizing system in this embodiment, the impact transfer data (damage exertion data) is set as the index for the standard part with respect to each of the components of each car type, and it is therefore feasible to easily recognize the precise damaged part in accordance with every car type simply by specifying the impact state data such as the impact input direction to the vehicle, the input height and the impact force.

The present invention is not limited to the contents in the embodiment discussed above and can be modified in many forms by those skilled in the art without departing from the scope of the gist according to the claims.

## Claims

1. A system for recognizing a damaged part of an accident vehicle, comprising:
storing means for storing vehicle attribute data for every car type, parts data for every car type and impact transfer data of each part for every car type;
impact state input means for inputting an input state of an impact upon a judgement target vehicle; and
damaged part judging means for judging which part is damaged on the basis of the input data from said impact state input means and the impact transfer data stored in said storing means.

2. A system for recognizing a damaged part of an accident vehicle according to claim 1, wherein said impact state input means sets, as the input state of the impact, pieces of data such as a degree of the impact upon the vehicle, an impact input point and an impact input direction.

3. A system for recognizing a damaged part of an accident vehicle according to claim 1 or 2, further comprising displaying means for displaying image data of the vehicle,
wherein said impact state input means inputs the input state of the impact upon the vehicle on a vehicle image displayed on said displaying means, and
said damaged part judging means displays the part judged to be damaged on said displaying means.

4. A system for recognizing a damaged part of an accident vehicle according to claim 3, wherein said damaged part judging means displays the damaged parts in a way that sorts out the damaged parts corresponding to a degree of the damage.

5. A system for recognizing a damaged part of an accident vehicle according to claim 1 or 2, wherein said damaged part judging means further judges the degree of the damage of the damaged part, and includes repair cost calculating means for calculating a repair cost from the parts data stored in said storing means.

6. A system for recognizing a damaged part of an accident vehicle according to claim 1 or 2, wherein said damaged part judging means further judges the degree of the damage of the damaged part, and includes repairing method presenting means for presenting a repair method on the basis of the parts data stored in said storing means.

7. A system for recognizing a damaged part of an accident vehicle according to claim 3 or 4, wherein said damaged part judging means judges and preferentially selects which method, a replacement or a repair, is advantageous to reduce the cost with respect to the damaged part.

8. A system for recognizing a damaged part of an accident vehicle according to claim 1, wherein said storing means further stores standard impact transfer data of the impact upon the vehicle with respect to the respective parts, and
the impact transfer data for every car type is set as an index value for the standard impact transfer data.

9. A system for recognizing a damaged part of an accident vehicle according to claim 1, wherein the impact transfer data stored in said storing means is set for every part of each car type as a ratio of an input impact value to an input impact value of the part.

10. A readable-by-computer medium recorded with a program executed by a computer including storing means for storing vehicle attribute data for every car type, parts data for every car type and impact transfer data of each part for every car type, and impact state input means for inputting an input state of an impact upon a judgement target vehicle, said program comprising:
a step of judging which part is damaged on the basis of the input data from said impact state input means and the impact transfer data stored in said storing means.
